# EUROPÄISCHE PATENTANMELDUNG

(11) **EP 2 383 412 A2**
(43) Veröffentlichungstag der Anmeldung: **02.11.2011**
(21) Anmeldenummer: 11002952.7
(22) Anmeldetag: 08.04.2011
(51) Int. Cl.: E05F 15/12, E05F 15/10

(54) **Klappenanordnung eines Kraftfahrzeugs**

(30) Priorität: 27.04.2010 DE 202010006168 U
(71) Anmelder: Brose Schliesssysteme GmbH & Co. KG, 42369 Wuppertal (DE)
(72) Erfinder: Brose, Simon, 45525 Hattingen (DE); Büdding, Gregor, 47259 Duisburg (DE); Bettin, Axel, 45527 Hattingen (DE); Wittelsbürger, Michael, 40233 Düsseldorf (DE)
(74) Vertreter: Gottschald, Jan

(57) **Zusammenfassung**

Die Erfindung betrifft eine Klappenanordnung, insbesondere Heckklappenanordnung, eines Kraftfahrzeugs mit einer an der Karosserie (1) des Kraftfahrzeugs schwenkbar angelenkten Klappe (2) und mit mindestens einem Antrieb (3) zur motorischen Verstellung der Klappe (2), wobei der Antrieb (3) einen Antriebsmotor (4) und ein dem Antriebsmotor (4) nachgeschaltetes Untersetzungsgetriebe (5) und ggf. ein dem Untersetzungsgetriebe (5) nachgeschaltetes Vorschubgetriebe (6) zur Erzeugung von Antriebsbewegungen aufweist, wobei der Antriebsstrang zwischen dem Antriebsmotor (4) und der Klappe (2) nicht selbsthemmend ausgestaltet ist, so dass die Klappe (2) bei abgeschaltetem Antriebsmotor (4) manuell verstellbar ist, wobei die Reibung im Antriebsstrang jedoch derart bremsend auf die Klappe (2) wirkt, dass die Klappe (2) bei abgeschaltetem Antriebsmotor (4) zumindest über einen Verstellbereich in ihrer jeweiligen Stellung gehalten wird. Es wird vorgeschlagen, dass das Untersetzungsgetriebe (5) mindestens eine Reibradgetriebestufe (7) aufweist, die mindestens einen in den Antriebsstrang geschalteten Reib-Wälzkörper (8) mit mindestens einer mit dem Reib-Wälzkörper (8) zusammenwirkenden Lauffläche (9, 10) aufweist und dass zumindest ein Teil der auf die Klappe (2) wirkenden Haltekraft auf die Verlustreibung zwischen dem mindestens einen Reib-Wälzkörper (8) und der mindestens einen Lauffläche (9, 10) zurückgeht.

## Beschreibung

Die vorliegende Erfindung betrifft eine Klappenanordnung, insbesondere eine Heckklappenanordnung, eines Kraftfahrzeugs mit einer an der Karosserie des Kraftfahrzeugs schwenkbar angelenkten Klappe gemäß dem Oberbegriff von Anspruch 1.

Die Begriffe "Klappenanordnung" und "Klappe" sind vorliegend weit auszulegen. Insoweit kann es sich bei der Klappe um eine Heckklappe, einen Heckdeckel oder um eine Motorhaube, aber auch um eine Seitentür, eine Laderaumklappe oder dergleichen handeln. Im Folgenden steht der Anwendungsfall der Heckklappenanordnung im Vordergrund, was nicht beschränkend zu verstehen ist.

Im Zuge der Komforterhöhung bei Kraftfahrzeugen kommt der motorischen Verstellung von Klappen, insbesondere von Heckklappen, zunehmende Bedeutung zu. Neben der motorischen Verstellbarkeit spielt dabei die Möglichkeit der manuellen Verstellbarkeit eine wichtige Rolle. Insbesondere im Notfall muss gewährleistet sein, dass sich die Klappe manuell verstellen lässt. Gleichzeitig muss unter allen Umständen vermieden werden, dass es bei unbestromten Antriebsmotor, beispielsweise bei Stromausfall, zu einer ungewünschten, selbsttätigen Verstellung der Klappe kommt.

Die bekannte Klappenanordnung (WO 00/46475 A1), von der die Erfindung ausgeht, ist als Heckklappenanordnung mit einer an der Karosserie des Kraftfahrzeugs schwenkbar angelenkten Heckklappe ausgestaltet. Die Heckklappenanordnung weist zwei Antriebe mit jeweils einem Antriebsmotor, einem dem Antriebsmotor nachgeschalteten Untersetzungsgetriebe und einem dem Untersetzungsgetriebe nachgeschalteten Vorschubgetriebe auf. Das Vorschubgetriebe zur Erzeugung der Antriebsbewegungen ist nach Art eines Kettengetriebes ausgestaltet.

Um eine manuelle Verstellbarkeit der Heckklappe zu gewährleisten, ist der Antriebsstrang zwischen dem Antriebsmotor und der Klappe nicht selbsthemmend ausgestaltet. Gleichzeitig ist der Antriebsstrang jedoch derart mit Reibung ausgelegt, dass die Klappe bei abgeschaltetem Antriebsmotor stets in ihrer jeweiligen Stellung gehalten wird.

Vorteilhaft bei der bekannten Heckklappenanordnung ist die Tatsache, dass das Halten der Heckklappe in Zwischenstellungen möglich ist, ohne dass zusätzliche Brems- oder Kupplungselemente Anwendung finden müssen. Dadurch ergibt sich eine insgesamt kostengünstige Anordnung.

Nachteilig bei der bekannten Heckklappenanordnung ist allerdings die Tatsache, dass deren Anpassung auf verschiedene Heckklappen mit unterschiedlichem Gewicht nur mit großem Aufwand möglich ist. Soll beispielsweise eine Heckklappe mit höherem Klappengewicht Einsatz finden, so muss die Reibung im Antriebsstrang erhöht werden. Dies lässt sich innerhalb des Untersetzungsgetriebes dadurch realisieren, dass die Zahnradkombination im Untersetzungsgetriebe modifiziert wird. Dies hat allerdings auch Einfluss auf das Untersetzungsverhältnis des Untersetzungsgetriebes, so dass zusätzliche, kostenintensive Anpassungsmaßnahmen notwendig sind.

Aus der obigen Erläuterung geht ferner hervor, dass eine "Feineinstellung" der Reibung im Antriebsstrang kaum möglich ist. Damit lässt sich eine optimale Auslegung des Gesamtsystems nie ganz erreichen.

Die bekannten Antriebskonzepte für die motorische Verstellung der Klappe eines Kraftfahrzeugs zeigen keine Verbesserung der obigen Situation. Eine bekannte Heckklappenanordnung (WO 2004/055308 A1) ist mit einem Antrieb ausgestattet, dem ein als Planetenradgetriebe ausgestaltetes Untersetzungsgetriebe zugeordnet ist. Ein Halten der Klappe in Zwischenstellungen wird hier nicht angesprochen. Für besonders leichte Klappen wird vorgeschlagen, ein Planetenradgetriebe mit gummierten Rollen zu verwenden.

Der Erfindung liegt das Problem zugrunde, die bekannte Heckklappenanordnung derart auszugestalten und weiterzubilden, dass deren Haltefunktion mit geringem Aufwand und gleichzeitig hoher Genauigkeit auf unterschiedliche Klappen anpassbar ist.

Das obige Problem wird bei einer Heckklappenanordnung gemäß dem Oberbegriff von Anspruch 1 durch die Merkmale des kennzeichnenden Teils von Anspruch 1 gelöst.

Im Einzelnen wird vorgeschlagen, dass das Untersetzungsgetriebe mindestens eine Reibradgetriebestufe aufweist, die mit mindestens einem in den Antriebsstrang geschalteten Reib-Wälzkörper und mindestens einer mit dem Reib-Wälzkörper zusammenwirkenden Lauffläche ausgestattet ist.

Bei der motorischen Verstellung wälzt sich der mindestens eine Reib-Wälzkörper auf mindestens einer Lauffläche ab. Das Abwälzen des mindestens einen Wälzkörpers auf mindestens einer Lauffläche geht je nach konstruktiver Umsetzung mit einer Drehung eines der jeweiligen Lauffläche zugeordneten Elements oder einer Verlagerung des Wälzkörpers einher, wobei in beiden Fällen der Antriebsstrang über den Wälzkörper verläuft. Dabei kann der Reib-Wälzkörper um eine feste Drehachse drehbar oder in einem käfigartigen Träger aufgenommen sein.

Unabhängig von der konstruktiven Umsetzung der Reibradgetriebestufe muss eine gewisse Reibung zwischen Reib-Wälzkörper und Lauffläche bereitgestellt werden, um das obige Abwälzen des Reib-Wälzkörpers zu garantieren. Diese Reibung wird im folgenden als "Antriebsreibung" bezeichnet, da diese Reibung eine notwendige Voraussetzung für die Übertragung von Antriebsbewegungen über die Reibradgetriebestufe ist und die mit dieser Reibung verbundenen Verluste in den Hintergrund treten.

Die Antriebsreibung hängt sowohl von der Vorspannung des jeweiligen Reib-Wälzkörpers auf die jeweilige Lauffläche als auch von dem resultierenden Schlupf zwischen diesen beiden Komponenten ab. Ein weiterer Einflußfaktor ist der Reibwert, der wiederum von dem Schlupf abhängt.

Bis zu einem gewissen Schlupfwert, der hier als "kritischer Schlupf" bezeichnet wird, handelt es sich bei der Antriebsreibung nicht um Gleitreibung, sondern um eine Mischreibung mit schlupfabhängigem Reibwert. Bei Überschreiten des kritischen Schlupfes stellt sich schließlich Rutschreibung zwischen Reib-Wälzkörper und Lauffläche ein, so dass eine Übertragung von Antriebsleistung nur noch begrenzt oder gar nicht möglich ist.

Neben der Antriebsreibung entsteht in der Reibradgetriebestufe reine Verlustreibung, die u.a. auf die Rollreibung zwischen Reib-Wälzkörper und Lauffläche zurückgeht und die an der Übertragung von Antriebsleistung nicht beteiligt ist. Diese Verlustreibung wird normalerweise als Nachteil von Reibradgetrieben angesehen, da sie sich ungünstig auf den Wirkungsgrad auswirkt. Für die vorschlagsgemäße Lösung stellt sich diese Verlustreibung allerdings als besonders vorteilhaft dar. Sie dient vorschlagsgemäß nämlich zum Halten der Klappe bei abgeschaltetem Antriebsmotor.

Sowohl die Antriebsreibung als auch der obige Anteil der Verlustreibung sind in erster Näherung linear abhängig von der Vorspannung des Reib-Wälzkörpers auf die mindestens eine Lauffläche, soweit sich die Reibradgetriebestufe nicht im Übergang zum Rutschbetrieb befindet. Damit ist es über eine Veränderung der Vorspannung des mindestens einen Reib-Wälzkörpers leicht möglich, die Verlustreibung und damit die auf die Reibradgetriebestufe zurückgehende Haltewirkung auf die Klappe einzustellen. Bei geeigneter konstruktiver Auslegung ist eine flexible Einstellung der Vorspannung mit geringem Aufwand möglich.

Letztlich bedeutet die vorschlagsgemäße Lösung, dass die Reibradgetriebestufe für das Halten der Klappe auf eine erhöhte Verlustreibung ausgelegt ist, verglichen mit einer hinsichtlich des Wirkungsgrads optimierten Auslegung. Für eine derartige Auslegung bietet eine Reibradgetriebestufe optimale Voraussetzungen.

Bei der bevorzugten Ausgestaltung gemäß Anspruch 4 ist die Vorspannung des mindestens einen Reib-Wälzkörpers um mehr als den Faktor 2,0 gegenüber der Vorspannung erhöht, die theoretisch gerade noch ausreicht, um den Rutschbetrieb zu vermeiden. Angesichts der Tatsache, dass ein entsprechender "Sicherheitsfaktor" von 1,4 gemeinhin als ausreichend angesehen wird, um einen ungewünschten Übergang in den Rutschbetrieb sicher zu vermeiden, ist damit klargestellt, dass die Vorspannung des mindestens einen Reib-Wälzkörpers gegenüber der für den Antrieb an sich erforderlichen Vorspannung deutlich erhöht ist. Bei den besonders bevorzugten Ausgestaltungen gemäß den Ansprüchen 5 bis 10 handelt es sich bei der Reibradgetriebestufe vorzugsweise um eine Planetenradgetriebestufe. Besonders vorteilhaft ist dabei die Ausgestaltung gemäß Anspruch 10, die eine besonders einfache Einstellbarkeit der Vorspannung des mindestens einen Reib-Wälzkörpers erlaubt.

Bei den weiter bevorzugten Ausgestaltungen gemäß den Ansprüchen 11 bis 13 weist das Untersetzungsgetriebe mindestens zwei Untersetzungsgetriebestufen auf, wobei gemäß Anspruch 11 der Anteil der Reibradgetriebestufe an der Erzeugung der Haltekraft an der Klappe verglichen mit den Anteilen der übrigen jeweils für sich genommenen Untersetzungsgetriebestufen überwiegt. Hier wird deutlich, dass die Auslegung der übrigen Getriebestufen weitgehend ohne Rücksicht auf das Halten der Klappe möglich ist, da die benötigte Haltewirkung mit wenig Aufwand von der Reibradgetriebestufe erzeugt werden kann.

Um die für das Halten der Klappe erforderliche Verlustreibung in der Reibradgetriebestufe möglichst gering zu halten, ist es gemäß Anspruch 13 vorzugsweise vorgesehen, dass die Reibradgetriebestufe die dem Antriebsmotor nächstliegende Untersetzungsgetriebestufe ist.

Gemäß Anspruch 14 ist die Reibradgetriebestufe so ausgelegt, dass der vermeintlich nachteilige Rutschbetrieb in besonders vorteilhafter Weise genutzt werden kann. Dabei führt eine manuelle Verstellung der Klappe mit einer Betätigungskraft, die über eine Grenz-Betätigungskraft hinausgeht, zu einer Überführung der Reibradgetriebestufe in den Rutschbetrieb. Damit sind alle bezogen auf die Reibradgetriebestufe jenseits der Klappe liegenden Antriebskomponenten von der übermäßigen Betätigung geschützt. Solche übermäßigen Betätigungskräfte sind oft auf eine missbräuchliche Benutzung der Heckklappenanordnung zurückzuführen.

Bei der besonders bevorzugten Ausgestaltung gemäß Anspruch 15 ist ein als Spindelgetriebe ausgestaltetes Untersetzungsgetriebe vorgesehen, wobei das Untersetzungsgetriebe und das Spindelgetriebe vorzugsweise koaxial zueinander ausgerichtet sind. Eine insbesondere nach Art eines Planetengetriebes ausgestaltete Reibradgetriebestufe erlaubt zusammen mit gegebenenfalls nachgeschalteten Zahnrad-Planetenradgetriebestufen und dem Spindelgetriebe eine insgesamt besonders kompakte Bauform.

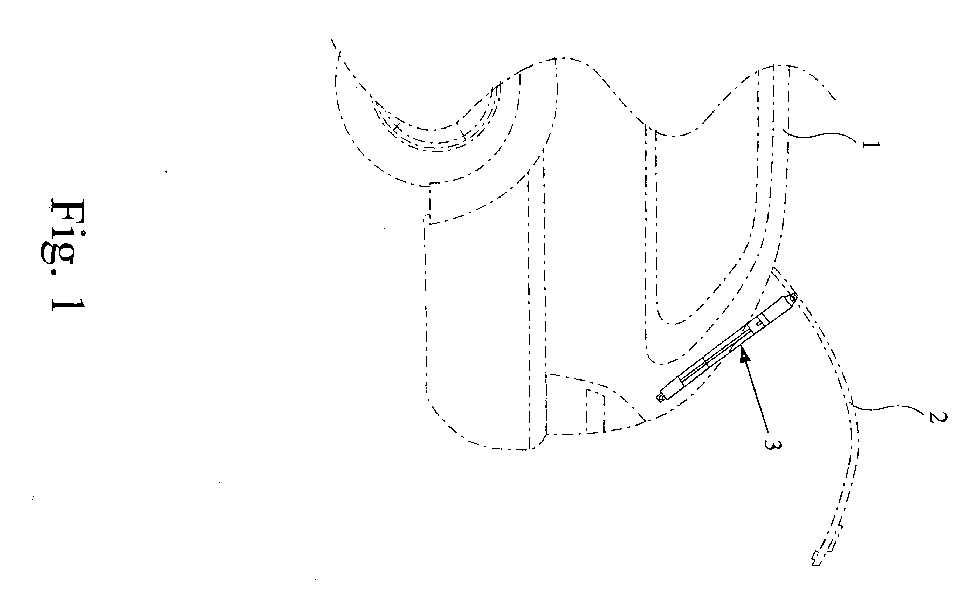

Im Folgenden wird die Erfindung anhand einer lediglich ein Ausführungsbeispiel darstellenden Zeichnung näher erläutert. In der Zeichnung zeigt
- Fig. 1: in einer ganz schematischen Darstellung den Heckbereich eines Kraftfahrzeugs mit einer vorschlagsgemäßen Heckklappenanordnung mit zwei Spindelantrieben,
- Fig. 2: einen Spindelantrieb gemäß Fig. 1 in einer ebenfalls schematischen Darstellung im Längsschnitt und
- Fig. 3: die Reibradgetriebestufe des Spindelantriebs gemäß Fig. 2 a) im Längsschnitt und b) im Querschnitt.

Das in der Zeichnung dargestellte Kraftfahrzeug ist mit einer Klappenanordnung ausgestattet, die hier und vorzugsweise als Heckklappenanordnung ausgestaltet ist. Zu der vorliegend weiten Auslegung des Begriffs "Klappenanordnung" sowie des Begriffs "Klappe" darf auf den einleitenden Teil der Beschreibung verwiesen werden.

Es darf vorab ferner darauf hingewiesen werden, dass vorliegend stets von "Kräften" die Rede ist, auch wenn strenggenommen in der Regel Drehmomente übertragen werden. Dies dient letztlich einer einfachen Darstellung.

Die Klappenanordnung weist eine an der Karosserie 1 des Kraftfahrzeugs schwenkbar angelenkte Klappe 2 auf. Der Klappenanordnung sind hier und vorzugsweise zwei Antriebe 3 zur motorischen Verstellung der Klappe 2 zugeordnet, wobei die Antriebe 3 an den beiden Randseiten der Heckklappenöffnung angeordnet sind. Grundsätzlich kann hier auch nur ein einziger Antrieb 3 vorgesehen sein.

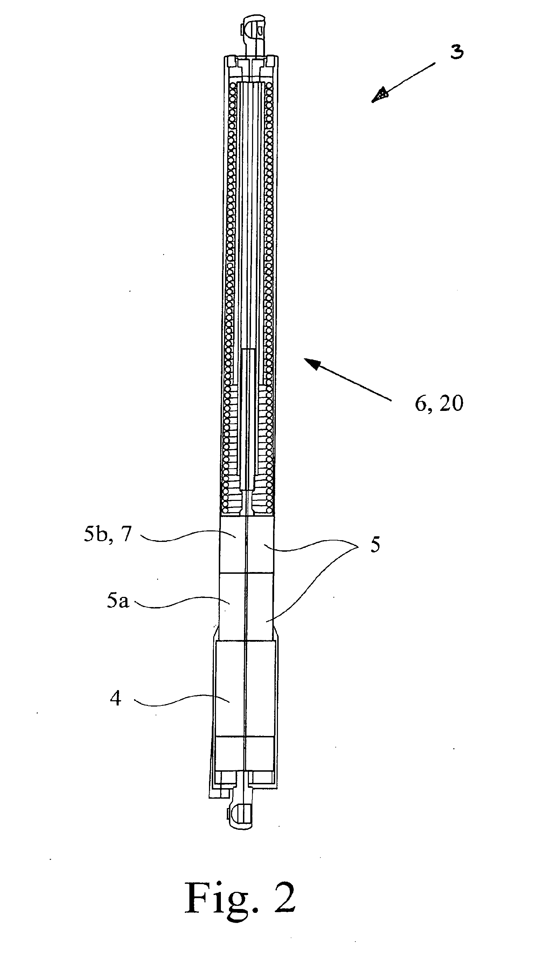

Fig. 2 zeigt einen der beiden Antriebe 3 im demontierten Zustand in ganz schematischer Darstellung. Der Antrieb 3 weist einen Antriebsmotor 4 und ein dem Antriebsmotor 4 nachgeschaltetes Untersetzungsgetriebe 5 sowie ein dem Untersetzungsgetriebe 5 nachgeschaltetes Vorschubgetriebe 6 zur Erzeugung von Antriebsbewegungen auf. Je nach konstruktiven Randbedingungen kann auf das Vorschubgetriebe 6 auch verzichtet werden, beispielsweise, wenn der Abtrieb des Untersetzungsgetriebes 5 direkt mit einer Scharnierachse der Klappe 2 gekoppelt ist.

Um die manuelle Verstellbarkeit der Klappe 2 bei abgeschaltetem Antriebsmotor 4 zu ermöglichen, ist der Antriebsstrang zwischen dem Antriebsmotor 4 und der Klappe 2 nicht selbsthemmend ausgestaltet.

Um weiter zu vermeiden, dass sich die Klappe 2 beispielsweise bei einem Stromausfall selbsttätig und ungewünscht verstellt, insbesondere, dass die Klappe 2 in einer solchen Situation zufällt, ist es vorgesehen, dass die Reibung im Antriebsstrang derart bremsend auf die Klappe 2 wirkt, dass die Klappe 2 bei abgeschaltetem Antriebsmotor 4 zumindest über einen Verstellbereich in ihrer jeweiligen Stellung gehalten wird. Die Reibung im Antriebsstrang ist also ursächlich für eine auf die Klappe 2 wirkende Haltekraft.

Es versteht sich, dass die Haltekraft bei einem einzigen Antrieb 3 allein von diesem Antrieb 3 aufzubringen ist, während sich die Haltekraft im dargestellten und insoweit bevorzugten Ausführungsbeispiel auf beide Antriebe 3 aufteilt.

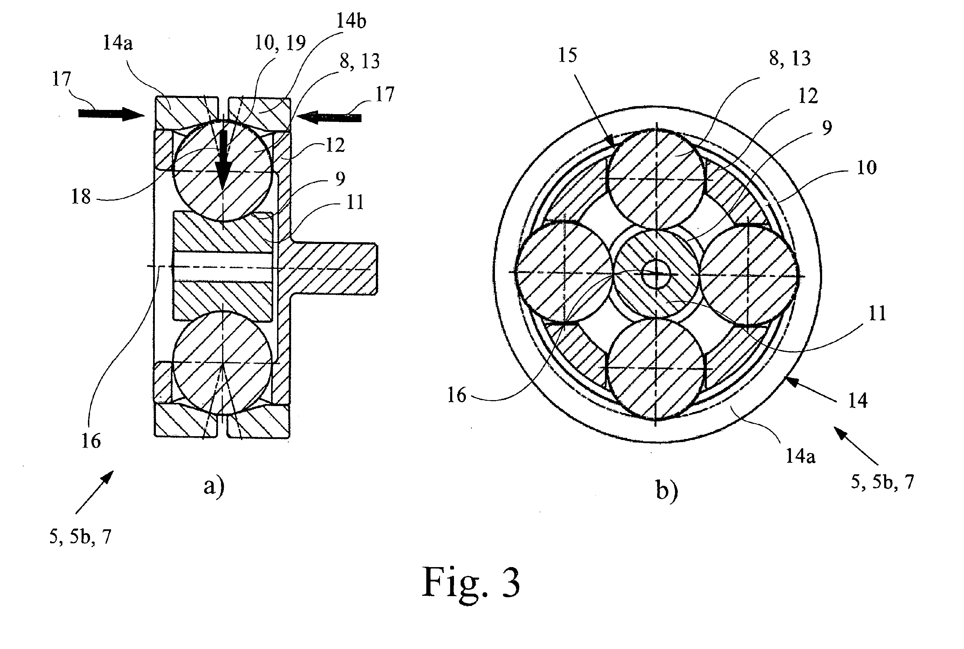

Der grundsätzliche Aufbau des Untersetzungsgetriebes 5 lässt sich der Darstellung gemäß Fig. 2 entnehmen. Demnach weist das Untersetzungsgetriebe 5 insgesamt zwei Untersetzungsgetriebestufen 5a, 5b auf. Vorschlagsgemäß handelt es sich bei einer der Untersetzungsgetriebestufen 5a, 5b um eine Reibradgetriebestufe 7, die beispielhaft in Fig. 3 dargestellt ist.

Die Reibradgetriebestufe 7 weist hier und vorzugsweise mehrere in den Antriebsstrang geschaltete Reib-Wälzkörper 8 auf. Jeder Reib-Wälzkörper 8 wirkt mit einer inneren Lauffläche 9 und einer äußeren Lauffläche 10 zusammen. Hier ist es also so, dass sich alle Reib-Wälzkörper 8 sowohl auf der inneren Lauffläche 9 als auch auf der äußeren Lauffläche 10 abwälzen.

Es darf darauf hingewiesen werden, dass grundsätzlich nur ein einziger Reib-Wälzkörper 8 in den Antriebsstrang geschaltet sein kann, dem eine Lauffläche oder mehrere Laufflächen zugeordnet sein kann bzw. können.

Wesentlich ist nun, dass zumindest ein Teil der auf die Klappe 2 wirkenden Haltekraft auf Verlustreibung zwischen dem mindestens einen Reib-Wälzkörper, hier den insgesamt vier Reib-Wälzkörpern 8, und der mindestens einen zugeordneten Lauffläche 9, 10, hier den beiden Laufflächen 9, 10, zurückgeht. Die hiermit verbundenen Vorteile wurden im allgemeinen Teil der Beschreibung erläutert.

Grundsätzlich kann der Anteil der Reibradgetriebestufe 7 an der auf die Klappe 2 wirkenden Haltekraft gering sein. Der Vorteil der Reibradgetriebestufe 7 äußert sich hier in der leichten Einstellbarkeit der für die Haltefunktion der Klappe 2 vorgesehenen Verlustreibung. Vorzugsweise kommt der Reibradgetriebestufe 7 aber ein ganz beträchtlicher Anteil an der Haltefunktion der Klappe 2 zu. Insbesondere geht vorzugsweise mindestens 20%, vorzugsweise mindestens 40% der auf die Klappe 2 wirkenden Haltekraft auf die Verlustreibung zwischen dem mindestens einen Reib-Wälzkörper 8 und der mindestens einen Lauffläche 9, 10 zurück.

Unabhängig von der obigen, absoluten Haltewirkung der Reibradgetriebestufe 7 ist es vorzugsweise jedenfalls vorgesehen, dass die Reibradgetriebestufe 7 auf eine gegenüber einer hinsichtlich des Wirkungsgrads optimierten Auslegung erhöhte Verlustreibung zum Halten der Klappe 2 bei abgeschaltetem Antriebsmotor 4 ausgelegt ist. Das scheint auf den ersten Blick ungewöhnlich, erklärt sich aber durch die für das Halten der Klappe 2 erforderliche Reibung, wie ebenfalls im allgemeinen Teil der Beschreibung erläutert wurde.

Vorzugsweise ist es so, dass die zumindest einen Teil der Haltekraft bereitstellende Verlustreibung in erster Linie auf die Rollreibung zwischen dem mindestens einen Reib-Wälzkörper 8 und der mindestens einen Lauffläche 9, 10 zurückgeht. Das ist vorteilhaft, da sich die Rollreibung durch eine entsprechende Vorspannung der Reib-Wälzkörper 8 leicht einstellen lässt.

Besondere Bedeutung kommt vorliegend der Auslegung der Vorspannung des mindestens einen Reib-Wälzkörpers zu. Vorschlagsgemäß ist diese Vorspannung wie weiter oben angesprochen über das für die motorische Verstellung der Klappe 2 an sich notwendige Maß ausgelegt.

Im Einzelnen ist es vorzugsweise vorgesehen, dass über alle bestimmungsgemäßen Betriebszustände der motorischen Verstellung der Klappe 2 gesehen bei einer theoretischen Mindest-Vorspannung der kritische Schlupf in einer Reibpaarung zwischen dem mindestens einen Reib-Wälzkörper 8 und der mindestens einen Lauffläche 9, 10 gerade erreicht, aber in keiner Reibpaarung überschritten wird und dass die tatsächliche Vorspannung mehr als das 2,0-fache, vorzugsweise mehr als das 3-fache und weiter vorzugsweise mehr als das 4-fache der Mindest-Vorspannung beträgt.

Es lässt sich der Darstellung in Fig. 3 entnehmen, dass die Reibradgetriebestufe 7 nach Art eines Planetengetriebes ausgestaltet ist und ein Sonnenrad 11, einen Planetenträger 12 mit Planetenwälzkörpern 13 und ein Hohlrad 14 umfasst. Dabei stellen die Planetenwälzkörper 13 jeweils einen Reib-Wälzkörper 8 und das Sonnenrad 11 die innere Lauffläche 9 sowie das Hohlrad 14 die äußere Lauffläche 10 bereit. Die Planetenwälzkörper 13 stehen also mit dem Sonnenrad 11 einerseits und dem Hohlrad 14 andererseits in reibschlüssigem Eingriff, wie dies bei Planetenradgetrieben üblich ist.

Für die Ausgestaltung der Reib-Wälzkörper 8 sind zahlreiche Möglichkeiten denkbar. Hier und vorzugsweise handelt es sich bei den Reib-Wälzkörpern 8 um Kugeln. Denkbar ist aber auch, die Reib-Wälzkörper 8 jeweils als Zylinder oder als Kegelstumpf auszugestalten.

Für die hier und vorzugsweise als Kugeln ausgestalteten Reib-Wälzkörper 8 ist es besonders vorteilhaft, wenn der Planetenträger 12 Aufnahmen 15 für die Planetenwälzkörper 13 aufweist, die die Planetenwälzkörper 13 so aufnehmen, dass ein Abwälzen der Planetenwälzkörper 13 am Sonnenrad 11 und am Hohlrad 14 gewährleistet ist. Dies lässt sich einer Zusammenschau der Teilansichten a) und b) in Fig. 3 entnehmen.

Die Materialwahl für die Komponenten des Planetengetriebes, insbesondere des Planetenträgers 12, kann in Abhängigkeit von den konstruktiven Randbedingungen unterschiedlich ausfallen. Im Hinblick auf eine Reduzierung von Reibverlusten sowie aus Kostengesichtspunkten kann es vorteilhaft sein, dass der Planetenträger 12 zumindest im Bereich der Aufnahmen 15 für die Planetenwälzkörper 13 aus einem Kunststoffinaterial besteht. In besonders bevorzugter Ausgestaltung ist der Planetenträger 12 einstückig aus diesem Kunststoffmaterial ausgestaltet. Denkbar ist aber auch, dass der Planetenträger 12 als ZweiKomponenten-Teil, insbesondere als Zweikomponenten-Kunststoffteil, ausgestaltet ist. Eine ganz besonders robuste Ausgestaltung ergibt sich, wenn die Aufnahmen 15 des Planetenträgers 12 zumindest teilweise aus Stahlblech ausgebildet sind.

Grundsätzlich kann ein weiterer Teil der auf die Klappe 2 wirkenden Haltekraft auch auf die Verlustreibung zwischen dem mindestens einen Reib-Wälzkörper 8 und dem Planetenträger 12 zurückgehen. Bei dieser Verlustreibung handelt es sich dann um reine Gleitreibung. Um diese Gleitreibung einzustellen, ist es vorzugsweise vorgesehen, dass die Aufnahmen 15 gegen die Planetenwälzkörper 13 vorgespannt sind. Hier bietet es sich an, den Planetenträger 12 mehrteilig auszugestalten und die mehreren Teile gegeneinander zu verspannen. Die Planetenwälzkörper 13 liegen dann klemmend, und nicht lose, in den jeweiligen Aufnahmen 15.

Im Sinne einer besonders hohen Lebensdauer ist es vorzugsweise vorgesehen, dass die Reib-Wälzkörper 8 aus gehärtetem Stahl ausgestaltet sind. Weiter vorzugsweise kann es vorgesehen sein, dass zumindest eine der beiden Laufflächen 9, 10, vorzugsweise das Sonnenrad 11 und/oder das Hohlrad 14, aus gehärtetem Stahl ausgestaltet ist bzw. sind.

Der Darstellung in Fig. 3 a) lässt sich eine besonders vorteilhafte Variante zur Realisierung der Vorspannung der Planetenwälzkörper 13 entnehmen. Hier und vorzugsweise ist das Hohlrad 14 quer zu der Sonnenradachse 16 geteilt, wobei die beiden Teile 14a, 14b entlang der Sonnenradachse 16 gegeneinander vorgespannt sind, wobei die Anordnung so getroffen ist, dass durch diese Vorspannung die Wälzkörpervorspannung einstellbar ist. Die Vorspannung der beiden Teile 14a, 14b des Hohlrads ist in Fig. 3a mit dem Bezugszeichen 17 versehen, während die Vorspannung der Planetenwälzkörper 13 mit dem Bezugszeichen 18 versehen ist.

Die obige Überführung der obigen Vorspannung 17 zwischen den beiden Teilen 14a, 14b des Hohlrades 14 in die Vorspannung 18 der Planetenwälzkörper 13 ergibt sich hier und vorzugsweise dadurch, dass die beiden Teile 14a, 14b des Hohlrads 14 jeweils mit einer entsprechenden Anschrägung versehen sind.

Es sind zahlreiche andere vorteilhafte Varianten für die Erzeugung der Vorspannung der Planetenwälzkörper 13 denkbar. Beispielsweise kann es vorgesehen sein, dass das Hohlrad 14 und/oder das Sonnenrad 11 im Längsschnitt keilförmig ausgestaltet ist bzw. sind, so dass durch eine entlang der Sonnenradachse 16 wirkenden Vorspannkraft eine entsprechende Vorspannung der Planetenwälzkörper 13 erzeugbar ist.

Fig. 2 zeigt, dass das Untersetzungsgetriebe 5 hier und vorzugsweise zwei Untersetzungsgetriebestufen 5a, 5b aufweist. Denkbar ist hier natürlich die Realisierung mehrerer Untersetzungsgetriebestufen.

Das Untersetzungsgetriebe 5 als solches ist wie erläutert gezielt mit einer gewissen Reibung ausgestattet, auf die ein Teil der Haltekraft für die Klappe 2 zurückgeht.

Hier und vorzugsweise ist es so, dass der Anteil der Reibradgetriebestufe an der Erzeugung der Haltekraft größer ist als der entsprechende Anteil der übrigen Untersetzungsgetriebestufe 5b bzw. als der entsprechende Anteil der jeweils für sich genommenen, übrigen (mehreren) Untersetzungsgetriebestufen. Das ist sachgerecht, da, wie oben erläutert, die Verlustreibung der Reibradgetriebestufe 7 auf besonders einfache Weise einstellbar ist.

Im Einzelnen ist der Anteil der Reibradgetriebestufe 7 an der Erzeugung der Haltekraft um mindestens 10 %, insbesondere um mindestens 20 %, größer als der entsprechende Anteil der übrigen Untersetzungsgetriebestufe 5b bzw. als der entsprechende Anteil der jeweils für sich genommenen, übrigen (mehreren) Untersetzungsgetriebestufen.

Hier und vorzugsweise handelt es sich bei der übrigen Untersetzungsgetriebestufe 5b bzw. bei den übrigen (mehreren) Untersetzungsgetriebestufen vorzugsweise um eine Zahnrad-Planetenradgetriebestufe. So lässt sich ein optimaler Kompromiss zwischen Robustheit einerseits und Flexibilität hinsichtlich der Haltefunktion andererseits erreichen.

Um die durch die Reibradgetriebestufe 7 zu übertragende Antriebskraft möglichst gering zu halten, ist es vorzugsweise vorgesehen, dass die Reibradgetriebestufe 7 die dem Antriebsmotor 4 nächstliegende Untersetzungsgetriebestufe 5a ist. Denkbar ist aber auch, dass zusätzlich zu der dem Antriebsmotor 4 nächstliegenden Untersetzungsgetriebestufe 5a eine dem Abtrieb des Untersetzungsgetriebes nächstliegende, als Reibradgetriebestufe ausgestaltete Untersetzungsgetriebestufe vorgesehen ist.

Insbesondere im letztgenannten Fall ist es vorzugsweise vorgesehen, dass die Reibradgetriebestufe 7 so ausgelegt ist, dass eine manuelle Verstellung der Klappe 2 mit einer Betätigungskraft, die über eine Grenz-Betätigungskraft hinaus geht, eine der Reibradgetriebestufen 7 in den Rutschbetrieb überführt und damit eine Unterbrechung des Antriebsstrangs bewirkt. Der Schutz der bezogen auf die Reibradgetriebestufe 7 jenseits der Klappe 2 gelegenen Antriebskomponenten wurde im allgemeinen Teil der Beschreibung erläutert. Sofern es sich bei der in den Rutschbetrieb zu überführenden Reibradgetriebestufe um die dem Abtrieb nächstliegende Untersetzungsgetriebestufe handelt, werden in obigem Sinne alle Antriebskomponenten des Untersetzungsgetriebes entsprechend geschützt.

Es wurde schon darauf hingewiesen, dass die Antriebe 3 jeweils insgesamt als Spindelantrieb ausgestaltet sind. Entsprechend ist es so, dass dem Untersetzungsgetriebe 5 ein Spindelgetriebe 20 zur Erzeugung von Antriebsbewegungen nachgeschaltet ist, wobei hier und vorzugsweise das Untersetzungsgetriebe 5 und das Spindelgetriebe 20 koaxial zueinander ausgerichtet sind. Weiter sind der Antriebsmotor 4, das Untersetzungsgetriebe 5 und das Spindelgetriebe 20 jeweils unmittelbar hintereinander angeordnet, so dass sich wie in Fig. 2 gezeigt ein besonders kompakter Aufbau ergibt.

## Patentansprüche

1. Klappenanordnung, insbesondere Heckklappenanordnung, eines Kraftfahrzeugs mit einer an der Karosserie (1) des Kraftfahrzeugs schwenkbar angelenkten Klappe (2) und mit mindestens einem Antrieb (3) zur motorischen Verstellung der Klappe (2), wobei der Antrieb (3) einen Antriebsmotor (4) und ein dem Antriebsmotor (4) nachgeschaltetes Untersetzungsgetriebe (5) und ggf. ein dem Untersetzungsgetriebe (5) nachgeschaltetes Vorschubgetriebe (6) zur Erzeugung von Antriebsbewegungen aufweist, wobei der Antriebsstrang zwischen dem Antriebsmotor (4) und der Klappe (2) nicht selbsthemmend ausgestaltet ist, so dass die Klappe (2) bei abgeschaltetem Antriebsmotor (4) manuell verstellbar ist, wobei die Reibung im Antriebsstrang jedoch derart bremsend auf die Klappe (2) wirkt, dass die Klappe (2) bei abgeschaltetem Antriebsmotor (4) zumindest über einen Verstellbereich in ihrer jeweiligen Stellung gehalten wird,
**dadurch gekennzeichnet,**
**dass** das Untersetzungsgetriebe (5) mindestens eine Reibradgetriebestufe (7) aufweist, die mindestens einen in den Antriebsstrang geschalteten Reib-Wälzkörper (8) mit mindestens einer mit dem Reib-Wälzkörper (8) zusammenwirkenden Lauffläche (9, 10) aufweist und dass zumindest ein Teil der auf die Klappe (2) wirkenden Haltekraft auf die Verlustreibung zwischen dem mindestens einen Reib-Wälzkörper (8) und der mindestens einen Lauffläche (9, 10) zurückgeht.

2. Klappenanordnung nach Anspruch 1, **dadurch gekennzeichnet, dass** mindestens 20%, vorzugsweise mindestens 40%, der auf die Klappe (2) wirkenden Haltekraft auf die Verlustreibung zwischen dem mindestens einen Reib-Wälzkörper (8) und der mindestens einen Lauffläche (9, 10) zurückgeht.

3. Klappenanordnung nach Anspruch 1 oder 2, **dadurch gekennzeichnet, dass** die zumindest einen Teil der Haltekraft bereitstellende Verlustreibung in erster Linie auf die Rollreibung zwischen dem mindestens einen Reib-Wälzkörper (8) und der mindestens einen Lauffläche (9, 10) zurückgeht.

4. Klappenanordnung nach einem der vorhergehenden Ansprüche, **dadurch gekennzeichnet, dass** der mindestens eine Reib-Wälzkörper (8) gegen die mindestens eine Lauffläche (9, 10) vorgespannt ist, dass bei der Einstellung einer theoretischen Mindest-Vorspannung und über alle bestimmungsgemäßen Betriebszustände der Klappenanordnung gesehen der kritische Schlupf in einer Reibpaarung zwischen dem mindestens einen Reib-Wälzkörper (8) und der mindestens einen Lauffläche (9, 10) gerade erreicht, aber in keiner Reibpaarung überschritten wird und dass die Vorspannung des mindestens einen Reib-Wälzkörpers (8) mehr als das 2,0-fache, vorzugsweise mehr als das 3-fache, weiter vorzugsweise mehr als das 4-fache der Mindest-Vorspannung beträgt.

5. Klappenanordnung nach einem der vorhergehenden Ansprüche, **dadurch gekennzeichnet, dass** die Reibradgetriebestufe (7) nach Art eines Planetengetriebes ausgestaltet ist und ein Sonnenrad (11), einen Planetenträger (12) mit Planetenwälzkörpern (13) und ein Hohlrad (14) umfasst, wobei die Planetenwälzkörper (13) jeweils einen Reib-Wälzkörper (8) und das Sonnenrad (11) sowie das Hohlrad (14) die Laufflächen (9, 10) bereitstellen, so dass die Planetenwälzkörper (13) mit dem Sonnenrad (11) einerseits und dem Hohlrad (14) andererseits in reibschlüssigem Eingriff stehen.

6. Klappenanordnung nach einem der vorhergehenden Ansprüche, **dadurch gekennzeichnet, dass** die Reib-Wälzkörper (8) jeweils als Kugel, als Zylinder oder als Kegelstumpf ausgestaltet sind.

7. Klappenanordnung nach einem der vorhergehenden Ansprüche, **dadurch gekennzeichnet, dass** der Planetenträger (12) Aufnahmen (15) für die Planetenwälzkörper (13) aufweist, die die Planetenwälzkörper (13) so aufnehmen, dass ein Abwälzen der Planetenwälzkörper (13) am Sonnenrad (11) und am Hohlrad (14) gewährleistet ist, vorzugsweise, dass der Planetenträger (12) zumindest im Bereich der Aufnahmen (15) für die Planetenwälzkörper (13) aus einem Kunststoffmaterial besteht.

8. Klappenanordnung nach Anspruch 7, **dadurch gekennzeichnet, dass** ein weiterer Teil der auf die Klappe (2) wirkenden Haltekraft auf die Verlustreibung zwischen dem mindestens einen Reib-Wälzkörper (8) und dem Planetenträger (12) zurückgeht und dass zur Einstellung dieser Verlustreibung die Aufnahmen (15) gegen die Planetenwälzkörper (13) vorgespannt sind.

9. Klappenanordnung nach einem der vorhergehenden Ansprüche, **dadurch gekennzeichnet, dass** die Reib-Wälzkörper (8) aus gehärtetem Stahl ausgestaltet sind, vorzugsweise, dass die mindestens eine Lauffläche (9, 10) aus gehärtetem Stahl ausgestaltet ist.

10. Klappenanordnung nach einem der vorhergehenden Ansprüche, **dadurch gekennzeichnet, dass** das Hohlrad (14) und/oder das Sonnenrad (11) quer zu der Sonnenradachse (16) geteilt ist bzw. sind, dass die beiden Teile (14a, 14b) entlang der Sonnenradachse (16) gegeneinander vorgespannt sind und dass die Anordnung so getroffen ist, dass durch diese Vorspannung (17) die Wälzkörpervorspannung (18) einstellbar ist.

11. Klappenanordnung nach einem der vorhergehenden Ansprüche, **dadurch gekennzeichnet, dass** das Untersetzungsgetriebe (5) mindestens zwei, vorzugsweise drei Untersetzungsgetriebestufen (5a, 5b), aufweist, dass auf die Reibung im Untersetzungsgetriebe (5) insgesamt ein Teil der Haltekraft zurückgeht und dass der Anteil der Reibradgetriebestufe (7) an der Erzeugung der Haltekraft größer ist als der entsprechende Anteil der übrigen Untersetzungsgetriebestufe (5a) bzw. als der entsprechende Anteil der jeweils für sich genommenen, übrigen Untersetzungsgetriebestufen, vorzugsweise, dass der Anteil der Reibradgetriebestufe (7) an der Erzeugung der Haltekraft um mindestens 10%, insbesondere um mindestens 20%, größer ist als der entsprechende Anteil der übrigen Untersetzungsgetriebestufe (5a) bzw. als der entsprechende Anteil der jeweils für sich genommenen, übrigen Untersetzungsgetriebestufen.

12. Klappenanordnung nach Anspruch 11, **dadurch gekennzeichnet, dass** das Untersetzungsgetriebe (5) neben der mindestens einen Reibradgetriebestufe (7) außerdem mindestens eine Zahnrad-Planetenradgetriebestufe (5b) umfasst.

13. Klappenanordnung nach Anspruch 11 und ggf. nach Anspruch 12, **dadurch gekennzeichnet, dass** die Reibradgetriebestufe (7) die dem Antriebsmotor (4) nächstliegende Untersetzungsgetriebestufe ist.

14. Klappenanordnung nach einem der vorhergehenden Ansprüche, **dadurch gekennzeichnet, dass** die Reibradgetriebestufe (7) so ausgelegt ist, dass eine manuelle Verstellung der Klappe (2) mit einer Betätigungskraft, die über eine Grenz-Betätigungskraft hinausgeht, die Reibradgetriebestufe (7) bzw. eine der Reibradgetriebestufen in den Rutschbetrieb überführt und damit eine Unterbrechung des Antriebsstrangs bewirkt.

15. Klappenanordnung nach einem der vorhergehenden Ansprüche, **dadurch gekennzeichnet, dass** dem Untersetzungsgetriebe (5) ein Spindelgetriebe (6, 20) zur Erzeugung von Antriebsbewegungen nachgeschaltet ist, vorzugsweise, dass das Untersetzungsgetriebe (5) und das Spindelgetriebe (6, 20) koaxial zueinander ausgerichtet sind.
